# FASCICULE DE BREVET EUROPEEN

(11) **EP 1 053 927 B1**
(45) Date de publication et mention de la délivrance du brevet: **04.08.2004**
(21) Numéro de dépôt: 00401234.0
(22) Date de dépôt: 05.05.2000
(51) Int. Cl.: B62D 5/04, B62D 1/02

(54) **Dispositif de direction électrique et mécanique de véhicule automobile**
Elektrische und mechanische Kraftfahrzeuglenkeinrichtung
Electrical and mechanical steering device of a motor vehicle

(30) Priorité: 17.05.1999 FR 9906320
(43) Date de publication de la demande: 22.11.2000
(73) Titulaire: NACAM France S.A., F-41100 Vendôme (FR)
(72) Inventeur: Duval, M. Benoît, 41100 Vendôme (FR); Gallou, M. Laurent, 41100 Vendôme (FR); Ben Rhouma, M. Abdel Karim, 41100 Vendôme (FR)
(74) Mandataire: Chassagnon, Jean-Alain

(56) Documents cités:
- EP-A- 0 755 845
- DE-A- 4 206 773
- DE-A- 19 714 297
- DE-C- 19 755 044
- GB-A- 2 270 776
- US-A- 4 421 495
- US-A- 5 275 250
- US-A- 5 598 897
- PATENT ABSTRACTS OF JAPAN vol. 008, no. 276 (M-346), 18 décembre 1984 (1984-12-18) -& JP 59 145662 A (NIHON HATSUJIYOU KK), 21 août 1984 (1984-08-21)

## Description

La présente invention se rapporte à un dispositif de direction électrique et mécanique des roues directrices d'un véhicule automobile. Le dispositif de direction comporte un volant de direction monté sur une colonne de direction, qui est reliée à une tige de direction des roues directrices.

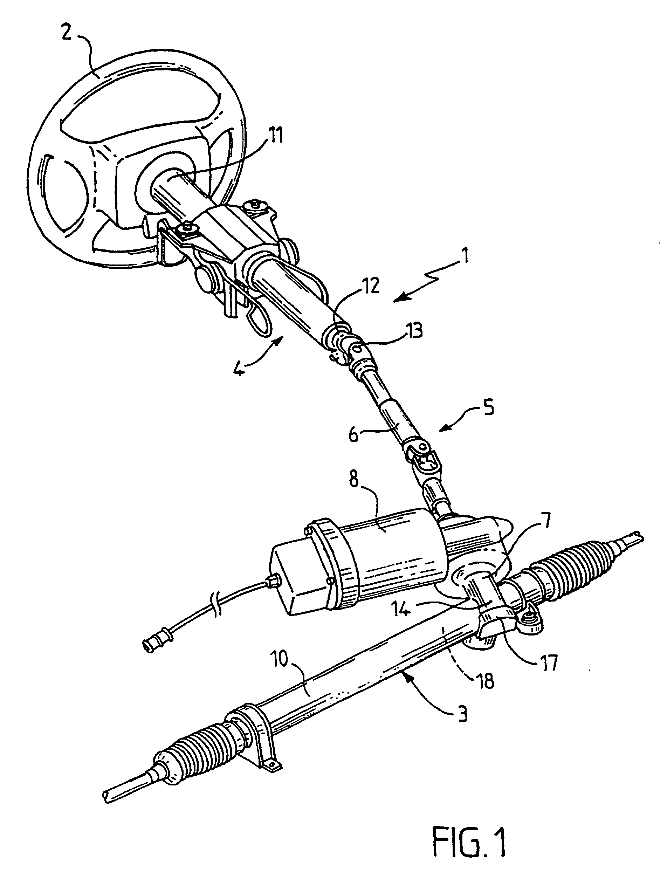

Dans les dispositifs de direction connus, qui sont actuellement montés sur les véhicules automobiles, la colonne de direction 1 est toujours mécanique comme celle représentée en figure 1, avec une partie haute de colonne 4 portant le volant de direction 2, dont la position est généralement réglable, et un arbre intermédiaire 6 disposé entre la partie haute de colonne 4 et le boîtier de direction 7 à pignon 17 et crémaillère 18 de la tige de direction 3. L'arbre intermédiaire 6 est relié à la partie haute de la colonne 4 et au boîtier de direction 7 par un cardan. Il y a éventuellement une assistance 8, qui peut être électrique. Ces types de colonnes de direction présentent de nombreux inconvénients en matière de confort et de sécurité. En effet, ces directions n'ont pas de retour à la position milieu du volant de direction. De plus, l'assistance de direction n'est pas adaptée au conducteur. Dans le domaine de la sécurité, les types de direction présentent l'inconvénient majeur d'un retour du choc sur le volant de direction en cas d'accident du fait de la liaison rigide entre le volant de direction et les roues directrices.

Le but de la présente invention est de proposer un dispositif de direction de véhicule automobile, qui évite les inconvénients décrits ci-dessus.

Il y a également comme dans le document DE 197 14 297 A, à partir duquel est établi le préambule de la revendication 1, des directions avec une liaison électrique en parallèle avec une liaison à câble travaillant seulement en traction. notamment ceux dus à la liaison rigide entre le volant de direction et les roues directrices.

Selon l'invention, le dispositif de direction de véhicule automobile comporte une colonne de direction, un volant de direction et une tige de direction des roues directrices du véhicule automobile. Ladite colonne de direction est constituée d'une partie haute de colonne et d'une partie intermédiaire de colonne. La partie haute de colonne est raccordée par l'une de ses extrémités au volant de direction, et par son autre extrémité à l'extrémité supérieure de la partie intermédiaire de colonne. Ladite partie intermédiaire de colonne est raccordée par son extrémité inférieure à la tige de direction des roues directrices du véhicule automobile.

La partie intermédiaire de colonne est constituée par deux liaisons : une liaison mécanique et une liaison électrique. La liaison mécanique et la liaison électrique sont disposées en parallèle, c'est-à-dire :
- que la liaison mécanique est raccordée d'une part à l'extrémité de la partie haute de colonne, et d'autre part à la tige de direction,
- et que la liaison électrique est raccordée d'une part à l'extrémité de la partie haute de colonne et d'autre part à la tige de direction.

Cet agencement est réalisé de manière qu'en conduite normale il y ait la liaison mécanique et la liaison électrique qui fonctionnent simultanément, et qu'en cas d'interruption de l'alimentation électrique, il y ait toujours la liaison mécanique qui assure la direction du véhicule automobile en fonctionnant seule.

D'après l'invention, la liaison électrique comporte :
- un capteur du couple demandé pour l'orientation des roues directrices,
- un convertisseur électromécanique d'énergie de commande du déplacement de la tige de direction des roues directrices,
- une unité centrale de commande reliée au capteur du couple et au convertisseur électromécanique d'énergie,
- de manière que ladite unité centrale de commande reçoive un signal électrique provenant du capteur du couple, et analyse le couple demandé afin de pouvoir envoyer au convertisseur électromécanique d'énergie un signal électrique de commande et de contrôle de l'effort fourni par ledit convertisseur électromécanique d'énergie.

D'après l'invention, la liaison mécanique comporte :
- un système à câble mécanique,
- un ensemble de raccordement supérieur du système à câble mécanique avec la partie haute de colonne de direction ;
- un ensemble de raccordement inférieur du système à câble mécanique avec la tige de direction des roues directrices.

Dans la liaison électrique, le convertisseur électromécanique d'énergie est soit un moteur électrique à courant continu à balais, soit un moteur électrique synchrone à courant continu sans balai, soit un moteur électrique synchrone à réluctance variable ou soit un moteur électrique asynchrone à courant alternatif.

Selon l'invention, le convertisseur électromécanique d'énergie peut être raccordé de différentes façons à la tige de direction. Dans un type de montage, le moteur électrique est relié à un pignon qui entraîne une crémaillère agencée sur la tige de direction. Dans un autre type de montage, le moteur électrique est relié à un système à vis et écrou, l'écrou étant solidaire du rotor du moteur, et la vis étant agencée sur la tige de direction.

Dans un autre type de montage, le moteur électrique est relié au pignon d'un boîtier de direction à crémaillère qui entraîne une crémaillère agencée sur la tige de direction.

Avantageusement dans la liaison électrique, le capteur du couple demandé pour l'orientation des roues directrices est disposé sur la partie haute de colonne de direction. Dans d'autres structures de la liaison électrique, le capteur du couple demandé pour l'orientation des roues directrices est disposé sur le pignon du boîtier de direction à crémaillère, ce qui permet d'avoir une valeur de couple plus proche de celle demandée par les roues directrices.

Pour améliorer la liaison électrique, un actionneur est disposé sur la partie haute de colonne de direction. Ledit actionneur est agencé pour le retour d'effort entre les roues directrices et le volant de direction et il est relié à l'unité centrale de commande. Préférentiellement, l'actionneur de retour d'effort est un moteur électrique.

Selon l'invention, dans une réalisation de la liaison mécanique, le système à câble mécanique comporte un câble travaillant en traction et en compression suivant le sens de rotation du volant de direction.

Dans un autre agencement de la liaison mécanique, le système à câble mécanique comporte un câble travaillant en torsion, ledit câble recevant et transmettant le mouvement de rotation venant du volant de direction.

D'après l'invention, l'ensemble de raccordement supérieur peut être réalisé de plusieurs manières. Dans un type de montage, l'ensemble de raccordement supérieur est constitué par un pignon qui engrène avec une crémaillère, ledit pignon étant entraîné en rotation par la partie haute de colonne de direction, et ladite crémaillère étant solidaire du câble mécanique.

Dans un autre type de montage, l'ensemble de raccordement supérieur est constitué par deux poulies d'enroulement, chacune des deux poulies d'enroulement:
- étant entraînée en rotation par le haut de colonne,
- et étant munie d'une gorge recevant l'extrémité correspondante du câble mécanique, chaque extrémité étant solidarisée avec la gorge de la poulie correspondante à l'endroit voulu.

Selon l'invention, l'ensemble de raccordement inférieur peut être obtenu de différentes façons. Dans un type de montage, l'ensemble de raccordement inférieur est constitué par un palier mobile fixé sur la tige de direction et traversant une lumière du carter de la tige de direction ; et par un palier fixe solidaire dudit carter de la tige de direction ; l'extrémité du câble mécanique traversant le palier fixe et s'accrochant sur le palier mobile.

Dans un autre montage, l'ensemble de raccordement inférieur est constitué par un palier mobile fixé sur la tige de direction et traversant une lumière du carter de la tige de direction, et par deux paliers fixes solidaires dudit carter de la tige de direction et disposés de part et d'autre de la lumière, chaque extrémité du câble mécanique traversant le palier fixe correspondant et s'accrochant sur le palier mobile.

Dans un autre montage, l'ensemble de raccordement inférieur est constitué par deux engrenages à crémaillère ; un premier engrenage avec une première crémaillère qui est solidaire du câble mécanique et qui entraîne un premier pignon, un deuxième engrenage avec un deuxième pignon qui entraîne une deuxième crémaillère qui est solidaire de la tige de direction, le premier pignon et le deuxième pignon étant montés sur le même axe et solidaires en rotation, le premier et le deuxième pignon étant agencés de façon que le déplacement du câble mécanique entraîne un déplacement différent de la tige de direction.

Dans une autre réalisation, l'ensemble de raccordement inférieur comporte une roue dentée engrenant avec une chaîne, dont les deux extrémités sont raccordées à l'extrémité inférieure correspondante des deux brins du câble mécanique ; la roue dentée étant montée sur l'arbre du moteur électrique de la liaison électrique, le moteur électrique entraînant l'arbre du pignon du boîtier de direction à crémaillère.

Avec cette liaison mécanique, la liaison électrique est caractérisée en ce que le capteur du couple est disposé sur l'arbre du pignon du boîtier de direction à crémaillère. Il y a de plus un actionneur de retour d'effort entre les roues directrices du véhicule et le volant de direction. Cet actionneur de retour d'effort est disposé sur la partie haute de colonne de direction et il est relié électriquement à l'unité centrale de commande.

Selon l'invention, dans un autre type d'architecture, le système à câble mécanique comporte un câble travaillant en torsion. L'ensemble de raccordement supérieur consiste en un embout agencé à l'extrémité correspondante du câble mécanique qui est muni d'une forme en creux, afin de pouvoir recevoir l'extrémité de la partie haute de colonne de direction. Ladite extrémité est munie d'une forme en relief dont les dimensions sont adaptées à la forme en creux de l'embout.

L'ensemble de raccordement inférieur consiste en un embout agencé à l'extrémité correspondante du câble mécanique qui est muni d'une forme en creux, afin de pouvoir recevoir l'extrémité de l'arbre du pignon du boîtier de direction à crémaillère. Ladite extrémité est munie d'une forme en relief dont les dimensions sont adaptées à la forme en creux de l'embout.

Le dispositif de direction électrique et mécanique de véhicule automobile selon l'invention présente ainsi l'avantage de n'avoir aucune liaison mécanique rigide entre les roues directrices et le volant de direction. Cette architecture supprime toute remontée de choc des roues directrices sur le volant de direction, ce qui augmente considérablement la sécurité du véhicule automobile. De plus, l'agencement de la liaison électrique avec son unité centrale de commande et de contrôle de l'effort fourni par le convertisseur électromécanique permet de prévoir une assistance de direction adaptée au conducteur et un retour piloté en position milieu du volant de direction.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective d'une direction de véhicule automobile dont la réalisation est connue ;
- la figure 2 et une vue en perspective d'un autre mode de réalisation de l'invention ;
- la figure 4 est une vue en perspective d'un autre mode de réalisation de la liaison mécanique selon l'invention ;

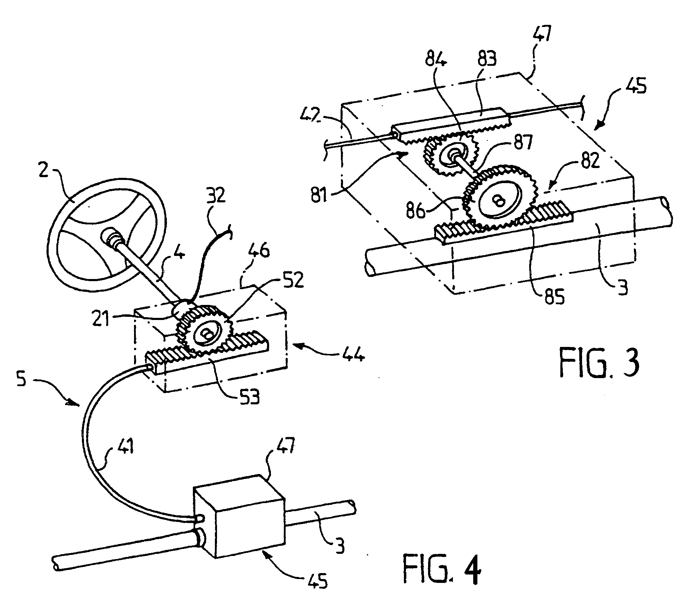

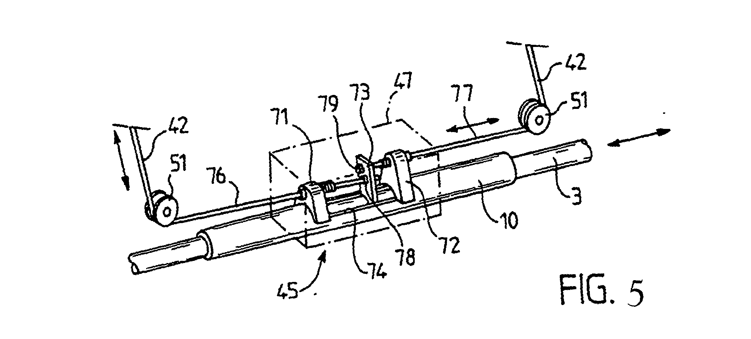

- la figure 3 est une vue en perspective d'une réalisation de l'ensemble de raccordement inférieur de la liaison mécanique représentée sur les figures 4 et 5 ;
- la figure 5 est une vue en perspective d'un autre mode de réalisation de l'ensemble de raccordement inférieur ;

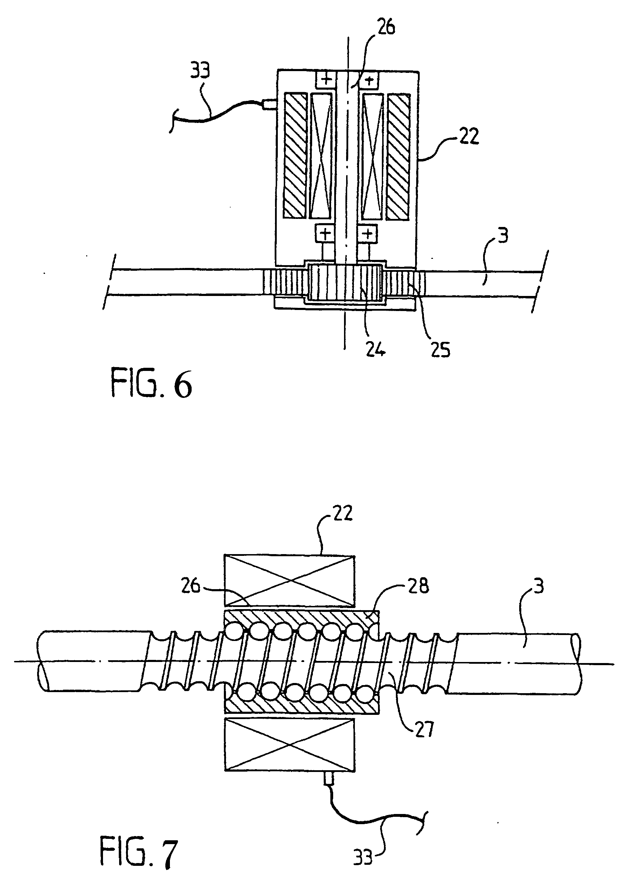

- la figure 6 est une vue en coupe de l'entraînement électrique de la tige de direction selon l'invention ;
- la figure 7 est une vue en coupe d'un autre mode de réalisation de l'entraînement électrique ;

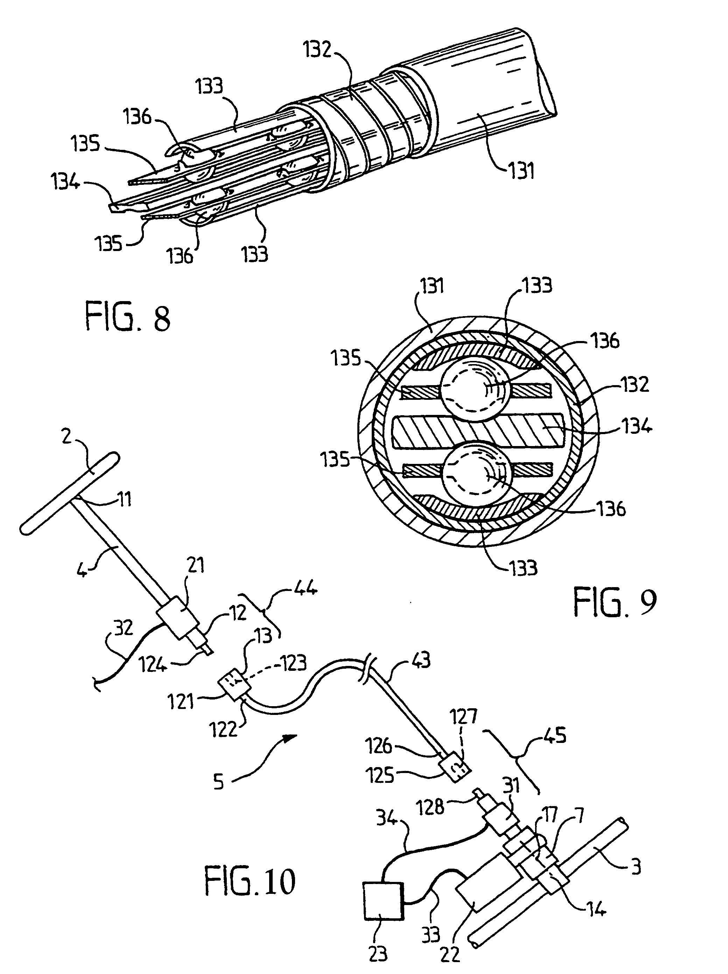

- la figure 10 est une vue d'un autre mode de réalisation de l'invention avec un câble de torsion.
- la figure 8 est une vue en perspective d'un câble de traction et de compression d'une réalisation connue .
- la figure 9 est une section du câble de la figure 8;

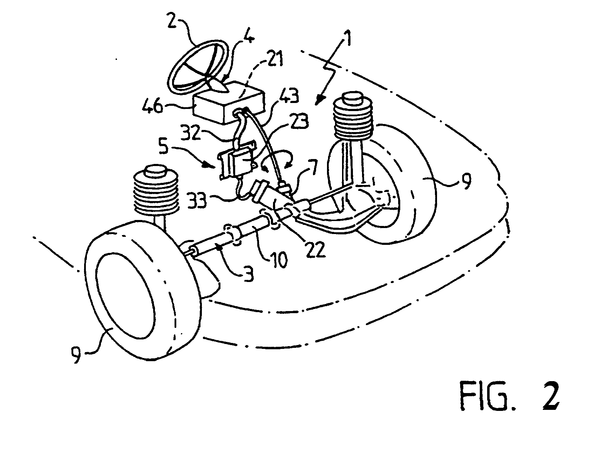

Comme on peut le voir sur la figure 1, la présente invention se rapporte à un dispositif de direction de véhicule automobile qui compote une colonne de direction 1, un volant de direction 2 et une tige de direction 3. La tige de direction 3 est montée dans un carter 10, qui est fixé sur la structure du véhicule. La tige de direction 3 commande l'orientation des roues directrices 9 des véhicules représentées sur la figure 2.

La colonne de direction est constituée par une partie haute de colonne 4 et par une partie intermédiaire de colonne 5. La partie haute de colonne 4 est raccordée, par l'une de ses extrémités 11 au volant de direction 2. La partie haute de colonne 4 est également raccordée, par son autre extrémité 12, à l'extrémité supérieure 13 de la partie intermédiaire de colonne 5. La partie intermédiaire de colonne 5 est aussi raccordée, par son extrémité inférieure 14, à la tige de direction 3 des roues directrices 9 du véhicule automobile.

Selon une caractéristique essentielle de l'invention représentée sur les figures 2, et 18, la partie intermédiaire de colonne 5 est constituée par deux liaisons : une liaison mécanique et une liaison électrique. La liaison mécanique et la liaison électrique sont disposées en parallèle.

La liaison mécanique est raccordée d'une part à l'extrémité 12 de la partie haute de colonne 4, et d'autre part à la tige de direction 3. La liaison électrique est raccordée d'une part à l'extrémité 12 de la partie haute de colonne 4 et d'autre part à la tige de direction 3.

Cet agencement est réalisé de manière, qu'en conduite normale il y ait la liaison mécanique et la liaison électrique qui fonctionnent simultanément ; et qu'en cas d'interruption de l'alimentation électrique, il y ait toujours la liaison mécanique qui assure la direction du véhicule automobile en fonctionnant seule.

Suivant les différentes réalisations de l'invention décrites ci-après, la liaison électrique comporte :
- un capteur du couple 21 ou 31 demandé pour l'orientation des roues directrices,
- un convertisseur électromécanique d'énergie 22 de commande du déplacement de la tige de direction 3 des roues directrices 9,
- et une unité centrale de commande 23 reliée au capteur du couple 21 ou 31 et au convertisseur électromécanique d'énergie 22.

Les différents branchements de la liaison électrique sont établis de manière, que ladite unité centrale de commande 23 reçoive un signal électrique provenant du capteur du couple 21 ou 31. L'unité centrale de commande 23 analyse le couple demandé, afin de pouvoir envoyer au convertisseur électromécanique d'énergie 22 un signal électrique de commande et de contrôle de l'effort fourni par ledit convertisseur électromécanique d'énergie 22.

Selon les montages possibles de la liaison électrique, le convertisseur électromécanique d'énergie 22 est soit un moteur électrique à courant continu à balais, soit un moteur électrique synchrone à courant continu sans balai, soit un moteur électrique synchrone à réluctance variable ou soit un moteur électrique asynchrone à courant alternatif.

Dans les structures décrites ci-après, la liaison mécanique comporte un système à câble mécanique 41, ou 43, et deux ensembles de raccordement.

Un ensemble de raccordement supérieur 44 relie le système à câble mécanique 41 ou 43 avec la partie haute de colonne de direction 4. Un ensemble de raccordement inférieur 45 relie le système à câble mécanique 41 ou 43 avec la tige de direction 3 des roues directrices 9 du véhicule.

Suivant les différents cas de montage, l'ensemble de raccordement supérieur 44 peut être disposé dans un boîtier supérieur 46, et l'ensemble de raccordement inférieur 45 peut être agencé dans un boîtier inférieur 47.

L'ensemble de raccordement inférieur 45, qui est représenté sur la figure 6, est constitué par deux engrenages à crémaillère 81 et 82. Un premier engrenage 81 a une première crémaillère 83 qui est solidaire du câble mécanique 42 et qui entraîne un premier pignon 84. Un deuxième engrenage 82 a un deuxième pignon 86 qui entraîne une deuxième crémaillère 85 qui est solidaire de la tige de direction 3. Le premier pignon 84 et le deuxième pignon 86 sont montés sur le même axe 87, et sont solidaires en rotation. Le premier et le deuxième pignon 84 et 86 sont agencés de façon que le déplacement du câble mécanique 42 entraîne un déplacement différent de la tige de direction 3.

Dans une variante de réalisation qui est représentée sur la figure 7, l'ensemble de raccordement inférieur 45 est constitué par un palier mobile 73 et par deux paliers fixes 71 et 72. Le palier mobile 73, est fixé sur la tige de direction 3 et traverse une lumière 74 du carter 10 de la tige de direction 3. Les deux paliers fixes 71 et 72 sont solidaires dudit carter 10 de la tige de direction 3, et sont disposés de part et d'autre de la lumière 74. Chaque extrémité 76 et 77 du câble mécanique 42 traverse le palier fixe correspondant 71 et 72 et s'accroche sur le palier mobile 73 en 78 et 79.

Dans les modes de réalisation qui sont représentés sur les figures 4, 8 et 9, la liaison électrique comporte un capteur du couple demandé 21 pour l'orientation des roues directrices 9 qui est disposé sur la partie haute de colonne 4.

L'unité centrale de commande 23 est reliée au capteur du couple 21 par le conducteur 32, et elle est reliée au moteur électrique 22 par le conducteur 33, comme cela est représenté sur la figure 2.

Dans une réalisation représentée en détail sur la figure 6, le convertisseur électromécanique d'énergie ou moteur électrique 22 a son rotor 26 qui est relié à un pignon 24. Le pignon 24 entraîne une crémaillère 25 agencée sur la tige de direction 3. Dans une autre réalisation représentée sur la figure 11, le moneur électrique 22 est relié à un système à vis et écrou. L'écrou 28 est solidaire du rotor 26 du moteur 22, et la vis 27 est agencée sur la tige de direction 3. L'unité centrale de commande 23 est reliée au capteur du couple 21 par le conducteur 32, et elle est reliée au moteur électrique 22 par le conducteur 33 comme cela est représenté sur les figures 2, 4, 8 et 9.

Le moteur électrique 22 peut aussi être relié à un pignon 17 d'un boîtier de direction 7 à crémaillère 18 agencé sur la tige de direction 3, comme cela est représenté sur les figures 13 et 15.

Dans le mode de réalisation représenté sur la figure 4, le système à câble mécanique comporte un câble 41 qui travaille en traction et en compression suivant le sens de rotation du volant de direction 2.

L'ensemble de raccordement supérieur 44 est constitué par un pignon 52 qui engrène avec une crémaillère 53. Le pignon 52 est entraîné en rotation par la partie haute de colonne de direction 4, et ladite crémaillère 53 est solidaire du câble mécanique 41.

Comme cela est représenté sur la figure 6, l'ensemble de raccordement inférieur 45 est constitué par un palier mobile 73 et par un palier fixe 71. Le palier mobile 73 est fixé sur la tige de direction 3 et il traverse une lumière 74 du carter 10 de la tige de direction 3. Le palier fixe 71 est solidaire dudit carter 10 de la tige de direction 3. L'extrémité 76 du câble mécanique 41 traversant le palier fixe 71 et s'accrochant sur le palier mobile 73 en 78.

Afin de réduire le débattement du câble 42, l'ensemble de raccordement inférieur 45 peut être du type représenté sur la figure 3.

L'ensemble de raccordement inférieur 45, qui est représenté sur la figure 3, est constitué par deux engrenages à crémaillère 81 et 82. Un premier engrenage 81 a une première crémaillère 83 qui est solidaire du câble mécanique 42 et qui entraîne un premier pignon 84. Un deuxième engrenage 82 a un deuxième pignon 86 qui entraîne une deuxième crémaillère 85 qui est solidaire de la tige de direction 3. Le premier pignon 84 et le deuxième pignon 86 sont montés sur le même axe 87, et sont solidaires en rotation. Le premier et le deuxième pignon 84 et 86 sont agencés de façon que le déplacement du câble mécanique 42 entraîne un déplacement différent de la tige de direction 3.

Dans le cas de la figure 4, la liaison électrique comporte un capteur du couple demandé 21 pour l'orientation des roues directrices 9 qui est disposé sur la partie haute de colonne 4.

L'unité centrale de commande 23 est reliée au capteur du couple 21 par le conducteur 32, et elle est reliée au moteur électrique 22 par le conducteur 33, comme cela est représenté sur la figure 2.

Les figures 2 et 10 se rapportent à la liaison mécanique dont le système à câble mécanique comporte un câble 43 travaillant en torsion, ledit câble 43 recevant et transmettant le mouvement de rotation venant du volant de direction 2.

Le système à câble mécanique comporte le câble 43 travaillant en torsion. L'ensemble de raccordement supérieur 44 consiste en un embout 121 agencé à l'extrémité correspondante 122 du câble mécanique 43 qui est muni d'une forme en creux 123, afin de pouvoir recevoir l'extrémité 12 de la partie haute de colonne de direction 4. Ladite extrémité 12 est munie d'une forme en relief 124 dont les dimensions sont adaptées à la forme en creux 123 de l'embout 121.

L'ensemble de raccordement inférieur 45 consiste en un embout 125 agencé à l'extrémité correspondante 126 du câble mécanique 43 qui est muni d'une forme en creux 127, afin de pouvoir recevoir l'extrémité de l'arbre du pignon 17 du boîtier de direction 7 à crémaillère. Ladite extrémité est munie d'une forme en relief 128 dont les dimensions sont adaptées à la forme en creux 127 de l'embout 125.

Dans ce type de montage, le capteur du couple demandé 21 peut être disposé sur la partie haute de colonne 4 de direction. L'unité centrale de commande 23 est reliée au capteur du couple 21 par le conducteur 32, et elle est reliée au moteur électrique 22 par le conducteur 33, comme cela est représenté sur la figure 2.

Dans le montage de la figure 10, le capteur du couple demandé 31 pour l'orienntation des roues directrices 9 est disposé sur le pignon 17 du boîtier de direction 7 à crémaillère.

L'unité centrale de commande 23 est reliée au capteur du couple 31 par le conducteur 34, et elle est reliée au moteur électrique 22 par le conducteur 33.

Selon l'invention, les différents types de liaisons électriques décrites peuvent être associés aux différents types de liaisons mécaniques décrites.

Le câble 41 qui travaille en traction et en compression peut être du type disponible dans le commerce, qui est représenté sur les figures 8 et 9.

Ce type de câble comporte deux rangées de billes 136 qui sont disposées entre un chemin de roulement central 134, et deux chemins de roulement externes 133. Les billes 136 de chaque rangée de billes sont maintenues en place, les unes par rapport aux autres, par deux cages 135. L'ensemble est tenu par une gaine de maintien 132, qui est entourée par une gaine extérieure 131.

## Revendications

1. Dispositif de direction de véhicule automobile qui comporte une colonne de direction (1), un volant de direction (2) et une tige de direction (3) des roues directrices (9) du véhicule automobile ; ladite colonne de direction est constituée d'une partie haute de colonne (4) et d'une partie intermédiaire de colonne (5) ; la partie haute de colonne (4) est raccordée par l'une de ses extrémités (11) au volant de direction (2), et ladite partie haute de colonne (4) étant raccordée par son autre extrémité (12) à l'extrémité supérieure (13) de la partie intermédiaire de colonne (5), ladite partie intermédiaire de colonne (5) étant raccordée par son extrémité inférieure (14) à la tige de direction (3) des roues directrices (9) du véhicule automobile, la partie intermédiaire de colonne (5) étant constituée par une liaison mécanique et une liaison électrique disposées en parallèle, qui sont raccordées d'une part à l'extrémité (12) de la partie haute de colonne (4), et d'autre part à la tige de direction (3), de manière qu'en conduite normale il y ait la liaison mécanique et la liaison électrique qui fonctionnent simultanément, **caractérisé en ce que** :
- la liaison mécanique comporte :
. un système à câble mécanique (41) travaillant en traction et en compression suivant le sens du volant de direction (2),
. un ensemble de raccordement supérieur (44) constitué par un pignon (52) qui engrène avec une crémaillère (53), ledit pignon (52) étant entraîné en rotation par la partie haute de colonne de direction (4) et ladite crémaillère (53) étant solidaire du câble mécanique (41) ;
. un ensemble de raccordement inférieur (45) du système à câble mécanique (41) avec la tige de direction (3) des roues directrices (9) ,
- la liaison électrique comporte :
. un capteur du couple (21, 31) demandé pour l'orientation des roues directrices,
. un convertisseur électromécanique d'énergie (22) de commande du déplacement de la tige de direction (3) des roues directrices (9),
. une unité centrale de commande (23) reliée au capteur du couple (21, 31) afin de commander et contrôler le convertisseur électromécanique d'énergie (22) ;
de manière qu'en cas d'interruption de l'alimentation électrique, il y ait toujours la liaison mécanique qui assure la direction du véhicule automobile en fonctionnant seule.

2. Dispositif de direction de véhicule automobile qui comporte une colonne de direction (1), un volant de direction (2) et une tige de direction (3) des roues directrices (9) du véhicule automobile ; ladite colonne de direction est constituée d'une partie haute de colonne (4) et d'une partie intermédiaire de colonne (5) ; la partie haute de colonne (4) est raccordée par l'une de ses extrémités (11) au volant de direction (2), et ladite partie haute de colonne (4) étant raccordée par son autre extrémité (12) à l'extrémité supérieure (13) de la partie intermédiaire de colonne (5), ladite partie intermédiaire de colonne (5) étant raccordée par son extrémité inférieure (14) à la tige de direction (3) des roues directrices (9) du véhicule automobile, la partie intermédiaire de colonne (5) étant constituée par une liaison mécanique et une liaison électrique disposées en parallèle, qui sont raccordées d'une part à l'extrémité (12) de la partie haute de colonne (4), et d'autre part à la tige de direction (3), de manière qu'en conduite normale il y ait la liaison mécanique et la liaison électrique qui fonctionnent simultanément, **caractérisé en ce que** :
- la liaison mécanique comporte :
. un système à câble mécanique (43) travaillant en torsion, qui reçoit et transmet le mouvement de rotation venant du volant de direction (2),
. un ensemble de raccordement supérieur (44), qui consiste en un embout (121) agencé à l'extrémité correspondante (122) du câble mécanique (43) qui est muni d'une forme en creux (123), afin de pouvoir recevoir l'extrémité (12) de la partie haute de colonne de direction (4), ladite extrémité (12) étant munie d'une forme en relief (124) dont les dimensions sont adaptées à la forme en creux (123) de l'embout (121),
. un ensemble de raccordement inférieur (45) consiste en un embout (125) agencé à l'extrémité correspondante (126) du câble mécanique (43) qui est muni d'une forme en creux (127), afin de pouvoir recevoir l'extrémité de l'arbre du pignon (17) du boîtier de direction (7) à crémaillère, ladite extrémité étant munie d'une forme en relief (128) dont les dimensions sont adaptées à la forme en creux (127) de l'embout (125) ;
- la liaison électrique comporte
. un capteur du couple (21, 31) demandé pour l'orientation des roues directrices,
. un convertisseur électromécanique d'énergie (22) de commande du déplacement de la tige de direction (3) des roues directrices (9),
. une unité centrale de commande (23) reliée au capteur du couple (21, 31) afin de commander et contrôler le convertisseur électromécanique d'énergie (22) ;
de manière qu'en cas d'interruption de l'alimentation électrique, il y ait toujours la liaison mécanique qui assure la direction du véhicule automobile en fonctionnant seule.

3. Dispositif selon l'une quelconque des revendications 1 et 2, **caractérisé en ce que** le convertisseur électromécanique d'énergie (22) est un moteur électrique à courant continu à balais.

4. Dispositif selon l'une quelconque des revendications 1 et 2, **caractérisé en ce que** le convertisseur électromécanique d'énergie (22) est un moteur électrique synchrone à courant continu sans balai.

5. Dispositif selon l'une quelconque des revendications 1 et 2, **caractérisé en ce que** le convertisseur électromécanique d'énergie (22) est un moteur électrique asynchrone à courant alternatif.

6. Dispositif selon l'une quelconque des revendications 1 et 2, **caractérisé en ce que** le convertisseur électromécanique d'énergie (22) est un moteur électrique synchrone à réluctance variable.

7. Dispositif selon l'une quelconque des revendications 3 à 6, **caractérisé en ce que** le moteur électrique (22) est relié à un pignon (24) qui entraîne une crémaillère (25) agencée sur la tige de direction (3).

8. Dispositif selon l'une quelconque des revendications 3 à 6, **caractérisé en ce que** le moteur électrique (22) est relié à un système à vis et écrou, l'écrou (28) étant solidaire du rotor (26) du moteur (22), et la vis (27) étant agencée sur la tige de direction (3).

9. Dispositif selon l'une quelconque des revendications 3 à 6, **caractérisé en ce que** le moteur électrique (22) est relié à un pignon (17) d'un boîtier de direction (7) à crémaillère qui entraîne une crémaillère (18) agencée sur la tige de direction (3).

10. Dispositif de direction selon l'une quelconque des revendications 1 et 2, **caractérisé en ce que** le capteur du couple demandé (21) pour l'orientation des roues directrices (9) est disposé sur la partie haute de colonne (4) de direction.

11. Dispositif de direction selon l'une quelconque des revendications 1 et 2, **caractérisé en ce que** le capteur du couple demandé (31) pour l'orientation des roues directrices (9) est disposé sur le pignon (17) du boîtier de direction (7) à crémaillère.

12. Dispositif de direction selon l'une quelconque des revendications 1 et 2, **caractérisé en ce qu'**un actionneur (29) est disposé sur la partie haute de colonne de direction, ledit actionneur étant agencé pour le retour d'effort entre les roues directrices (9) et le volant de direction (2) et relié à l'unité centrale de commande (23).

13. Dispositif de direction selon la revendication 12, **caractérisé en ce que** l'actionneur de retour d'effort (29) est un moteur électrique.

14. Dispositif de direction selon la revendication 1, **caractérisé en ce que** l'ensemble de raccordement inférieur (45) est constitué par un palier mobile (73) fixé sur la tige de direction (3) et traversant une lumière (74) du carter (10) de la tige de direction (3) ; et par un palier fixe (71) solidaire dudit carter (10) de la tige de direction (3) ; l'extrémité du câble mécanique (41) traversant le palier fixe (71) et s'accrochant sur le palier mobile (73).

15. Dispositif de direction selon l'une quelconque des revendications 1 et 2, **caractérisé en ce que** l'ensemble de raccordement inférieur (45) est constitué par deux engrenages à crémaillère (81, 82) ; un premier engrenage (81) avec une première crémaillère (83) qui est solidaire du câble mécanique (41) et qui entraîne un premier pignon (84), un deuxième engrenage (82) avec un deuxième pignon (86) qui entraîne une deuxième crémaillère (85) qui est solidaire de la tige de direction (3), le premier pignon (84) et le deuxième pignon (86) étant montés sur le même axe (87) et solidaires en rotation, le premier et le deuxième pignon étant agencés de façon que le déplacement du câble mécanique (41) entraîne un déplacement différent de la tige de direction (3).

16. Dispositif de direction selon la revendication 9, **caractérisé en ce que** le capteur du couple (31) est disposé sur l'arbre du pignon (17) du boîtier de direction (7) à crémaillère, et qu'un actionneur de retour d'effort (29) entre les roues directrices (9) du véhicule et le volant de direction (2) est disposé sur la partie haute de colonne (4) de direction, ledit actionneur de retour d'effort (29) étant relié électriquement à l'unité centrale de commande (23).

## Claims

1. An automobile vehicle steering system which includes a steering column (1) , a steering wheel (2) and a steering rack (3) for the steered wheels (9) of the automobile vehicle ; said steering column has an upper column part (4) and an intermediate column part (5) ; the upper column part (4) is connected at one of its ends (11) to the steering wheel (2), and said upper column part (4) being connected at its other end (12) to the upper end (13) of the intermediate column part (5), said intermediate column part (5) being connected at its lower end (14) to the steering rack (3) for the steered wheels (9) of the automobile vehicle, the intermediate column part (5) being constituted by a mechanical connection and an electrical connection disposed in parallel, which are connected on the one hand to the end (12) of the upper column part (4), and on the other hand to the steering rack (3), so that under normal driving conditions the mechanical connection and the electrical connection function simultaneously, and **characterized in that** :
- the mechanical connection comprises :
. a mechanical cable system (41) including a cable operating in traction and in compression according to the direction of the steering wheel (2),
. an upper connecting assembly (44) including a pinion (52) which engages with a rack (53), said pinion (52) being rotatably driven by the upper steering column part (4) and said rack (53) being attached to the mechanical cable (41) ;
. a lower connecting assembly (45) for connecting the mechanical cable system (41) to the steering rack (3) for the steered wheels (9),
- the electrical connection comprises :
. a torque sensor (21, 31) sensing the demanded torque for steering said steered wheels,
. an electromechanical power converter (22) commanding the displacement of the steering rack (3) for the steered wheels (9),
. a central control unit (23) connected to the torque sensor (21, 31) to command and control the electromechanical power converter (22);
so that if the electrical power supply fails the mechanical connection remains and is used to steer the automobile vehicle on its own.

2. An automobile vehicle steering system which includes a steering column (1), a steering wheel (2) and a steering rack (3) for the steered wheels (9) of the automobile vehicle ; said steering column has an upper column part (4) and an intermediate column part (5) ; the upper column part (4) is connected at one of its ends (11) to the steering wheel (2), and said upper column part (4) being connected at its other end (12) to the upper end (13) of the intermediate column part (5), said intermediate column part (5) being connected to its lower end (14) to the steering rack (3) for the steered wheels (9) of the automobile vehicle, the intermediate column part (5) being constituted by a mechanical connection and an electrical connection disposed in parallel, which are connected on the one hand to the end (12) of the upper column part (4), and on the other hand to the steering rack (3), so that under normal driving conditions the mechanical connection and the electrical connection function simultaneously, and **characterized in that** :
- the mechanical connection comprises :
. a mechanical cable system (43) includes a cable operating in torsion and receiving and transmitting rotational movement of the steering wheel (2),
. an upper connecting assembly (44), which consists of an end-piece (121) arranged at the corresponding end (122) of the mechanical cable (43) which has a recessed shape (123) adapted to receive the end (12) of the upper steering column part (4), said end (12) having a projecting shape (124) whose dimensions match the recessed shape (123) of the end-piece (121),
. a lower connecting assembly (45) consists of an end-piece (125) arranged at the corresponding end (126) of the mechanical cable (43) which has a recessed shape (127) adapted to receive the end of the shaft of the pinion (17) of the rack-and-pinion steering box (7), said end having a projecting shape (128) whose dimensions match the recessed shape (127) of the end-piece (125) ;
- the electrical connection comprises :
. a torque sensor (21, 31) sensing the demanded torque for steering said steered wheels,
. an electromechanical power converter (22) commanding the displacement of the steering rack (3) for the steered wheels (9),
. a central control unit (23) connected to the torque sensor (21, 31) to command and control the electromechanical power converter (22);
so that if the electrical power supply fails the mechanical connection remains and is used to steer the automobile vehicle on its own.

3. A system according to any one of claims 1 and 2, **characterized in that** the electromechanical power converter (22) is a DC electric motor with brushes.

4. A system according to any one of claims 1 and 2, **characterized in that** the electromechanical power converter (22) is a brushless synchronous DC electric motor.

5. A system according to any one of claims 1 and 2, **characterized in that** the electromechanical power converter (22) is an asynchronous AC electric motor.

6. A system according to any one of claims 1 and 2, **characterized in that** the electromechanical power converter (22) is a variable reluctance synchronous electric motor.

7. A system according to any one of claims 3 to 6, **characterized in that** the electric motor (22) is connected to a pinion (24) which drives a rack (25) on the steering rack (3).

8. A system according to any one of claims 3 to 6, **characterized in that** the electric motor (22) is connected to a screw and nut system, the nut (28) being attached to the rotor (26) of the motor (22), and the screw (27) being arranged on the steering rack (3).

9. A system according to any one of claims 3 to 6, **characterized in that** the electric motor (22) is connected to a pinion (17) of a rack-and-pinion steering box (7) which drives a rack (18) arranged on the steering rack (3).

10. A system according to any one of claims 1 and 2, **characterized in that** the demanded torque sensor (21) for steering the steered wheels (9) is disposed on the upper steering column part (4).

11. A system according to any one of claims 1 and 2, **characterized in that** the demanded torque sensor (21) for steering the steered wheels (9) is disposed on the pinion (17) of the rack-and-pinion steering box (7).

12. A system according to any one of claims 1 and 2, **characterized in that** an actuator (29) is disposed on the upper steering column part, said actuator being adapted to provide feedback between the steered wheels (9) and the steering wheel (2) and is connected to the central control unit (23).

13. The system according to the claim 12, **characterized in that** the feedback actuator (29) is an electric motor.

14. A system according to claim 1, **characterized in that** the lower connecting assembly (45) consists of a mobile bearing (73) fixed to the steering rack (3) and passing through an opening (74) in the housing (10) of the steering rack (3) ; and a fixed bearing (71) attached to said housing (10) of the steering rack (3) ; the end of the mechanical cable (41) passing through the fixed bearing (71) and being attached to the mobile bearing (73).

15. A system according to any one of claims 1 and 2, **characterized in that** the lower connecting assembly (45) consists of two rack-and-pinion gears (81, 82) ; namely a first gear (81) with a first rack (83) which is attached to the mechanical cable (41) and which drives a first pinion (84), a second gear (82) with a second pinion (86) which drives a second rack (85) which is attached to the steering rack (3), the first pinion (84) and the second pinion (86) being mounted on the same shaft (87) and constrained to rotate together, the first and second pinions being arranged such that displacement of the mechanical cable (41) displaces the steering rack (3) differently.

16. A system according to claim 9, **characterized in that** the torque sensor (31) is disposed on the shaft of the pinion (17) of the rack-and-pinion steering box (7), and **in that** an actuator providing feedback (29) between the steered wheels (9) of the vehicle and the steering wheel (2) is disposed on the upper steering column part (4), said feedback actuator (29) being electrically connected to the central control unit (23).

## Patentansprüche

1. Kraftfahrzeug-Lenkvorrichtung, die eine Lenksäule (1), ein Lenkrad (2) und eine Lenkstange (3) der Vorderräder (9) des Kraftfahrzeugs aufweist; die genannte Lenksäule besteht aus einem oberen Säulenabschnitt (4) und einem mittleren Säulenabschnitt (5); der obere Säulenabschnitt (4) ist an einem Ende (11) mit dem Lenkrad (2) verbunden, wobei der genannte obere Säulenabschnitt (4) am anderen Ende (12) mit dem oberen Ende (13) des mittleren Säulenabschnitts (5) verbunden ist und der genannte mittlere Säulenabschnitt (5) an seinem unteren Ende (14) mit der Lenkstange (3) der Vorderräder (9) des Kraftfahrzeugs verbunden ist, und wobei der mittlere Säulenabschnitt (5) eine mechanische Verbindung und eine elektrische Verbindung aufweist, die parallel angeordnet sind und einerseits mit dem Ende (12) des oberen Säulenabschnitts (4) und andererseits mit der Lenkstange (3) verbunden sind, derart und **dadurch gekennzeichnet, dass**:
- die mechanische Verbindung Folgendes aufweist:
. ein mechanisches Kabelsystem (41), das entsprechend der Drehrichtung des Lenkrades (2) mit Zug- und Druckkraft arbeitet,
. eine obere Verbindungseinheit (44), bestehend aus einem Zahnrad (52), das in eine Zahnstange (53) eingreift, wobei das genannte Zahnrad (52) durch den oberen Abschnitt der Lenksäule (4) in Drehung versetzt wird und die genannte Zahnstange (53) fest mit dem mechanischen Kabel (41) verbunden ist;
. eine untere Verbindungseinheit (45) des mechanischen Kabelsystems (41) mit der Lenkstange (3) der Vorderräder (9),
- die elektrische Verbindung Folgendes aufweist:
· einen Drehmomentsensor (21, 31) zur Ausrichtung der Vorderräder,
· einen elektromechanischen Energiewandler (22) zur Steuerung der Verschiebung der Lenkstange (3) der Vorderräder (9),
· eine zentrale Steuereinheit (23), die zur Regelung und Steuerung des elektromechanischen Energiewandlers (22) mit dem Drehmomentsensor (21, 31) verbunden ist;
derart, dass die mechanische Verbindung und die elektrische Verbindung bei normalem Betrieb gleichzeitig arbeiten, und dass im Falle einer Unterbrechung der Stromversorgung immer noch die mechanische Verbindung funktioniert, die im alleinigen Betrieb die Lenkung des Kraftfahrzeugs gewährleistet.

2. Kraftfahrzeug-Lenkvorrichtung, die eine Lenksäule (1), ein Lenkrad (2) und eine Lenkstange (3) der Vorderräder (9) des Kraftfahrzeugs aufweist; die genannte Lenksaule besteht aus einem oberen Säulenabschnitt (4) und einem mittleren Säulenabschnitt (5); der obere Säulenabschnitt (4) ist an einem Ende (11) mit dem Lenkrad (2) verbunden, wobei der genannte obere Säulenabschnitt (4) am anderen Ende (12) mit dem oberen Ende (13) des mittleren Säulenabschnitts (5) verbunden ist und der genannte mittlere Säulenabschnitt (5) an seinem unteren Ende (14) mit der Lenkstange (3) der Vorderräder (9) des Kraftfahrzeugs verbunden ist, und wobei der mittlere Säulenabschnitt (5) eine mechanische Verbindung und eine elektrische Verbindung aufweist, die parallel angeordnet sind und einerseits mit dem Ende (12) des oberen Säulenabschnitts (4) und andererseits mit der Lenkstange (3) verbunden sind, derart und **dadurch gekennzeichnet, dass**:
- die mechanische Verbindung Folgendes aufweist:
· ein mechanisches Kabelsystem (43), das mit Biegekraft arbeitet und die Drehbewegung des Lenkrades (2) aufnimmt und überträgt,
· eine obere Verbindungseinheit (44), die ein Endstück (121) aufweist, das am entsprechenden Ende (122) des mechanischen Kabels (43) angeordnet ist und zur Aufnahme des Endes (12) des oberen Abschnitts der Lenksäule (4) über eine Vertiefung (123) verfügt, wobei das genannte Ende (12) über einen Vorsprung (124). verfügt, dessen Abmessungen der Vertiefung (123) des Endstücks (121) entsprechen,
· eine untere Verbindungseinheit (45), die ein Endstück (125) aufweist, das am entsprechenden Ende (126) des mechanischen Kabels (43) angeordnet ist und zur Aufnahme des Endes der Zahnstange (17) des Lenkgehäuses (7) mit Zahnstange über eine Vertiefung (127) verfügt, wobei das genannte Ende über einen Vorsprung (128) verfügt, dessen Abmessungen der Vertiefung (127) des Endstücks (125) entsprechen;
- die elektrische Verbindung Folgendes aufweist:
· einen Drehmomentsensor (21, 31) zur Ausrichtung der Vorderräder,
· einen elektromechanischen Energiewandler (22) zur Steuerung der Verschiebung der Lenkstange (3) der Vorderräder (9),
· eine zentrale Steuereinheit (23), die zur Regelung und Steuerung des elektromechanischen Energiewandlers (22) mit dem Drehmomentsensor (21, 31) verbunden ist;
derart, dass die mechanische Verbindung und die elektrische Verbindung bei normalem Betrieb gleichzeitig arbeiten, und dass im Falle einer Unterbrechung der Stromversorgung immer noch die mechanische Verbindung funktioniert, die im alleinigen Betrieb die Lenkung des Kraftfahrzeugs gewährleistet.

3. Vorrichtung nach einem der Ansprüche 1 und 2, **dadurch gekennzeichnet, dass** der elektromechanische Energiewandler (22) ein Gleichstrom-Elektromotor mit Kohlebürste ist.

4. Vorrichtung nach einem der Ansprüche 1 und 2, **dadurch gekennzeichnet, dass** der elektromechanische Energiewandler (22) ein synchroner Gleichstrom-Elektromotor ohne Kohlebürste ist.

5. Vorrichtung nach einem der Ansprüche 1 und 2, **dadurch gekennzeichnet, dass** der elektromechanische Energiewandler (22) ein Asynchron-Wechselstrom-Elektromotor ist.

6. Vorrichtung nach einem der Ansprüche 1 und 2, **dadurch gekennzeichnet, dass** der elektromechanische Energiewandler (22) ein synchroner Elektromotor mit variablem magnetischen Widerstand ist.

7. Vorrichtung nach einem der Ansprüche 3 bis 6, **dadurch gekennzeichnet, dass** der Elektromotor (22) mit einem Zahnrad (24) verbunden ist, das in eine Zahnstange (25) eingreift, die an der Lenkstange(3) angeordnet ist.

8. Vorrichtung nach einem der Ansprüche 3 bis 6, **dadurch gekennzeichnet, dass** der Elektromotor (22) mit einem Schrauben-Muttern-System verbunden ist, wobei die Mutter (28) fest mit dem Rotor (26) des Motors (22) verbunden ist und die Schraube (27) an der Lenkstange (3) angeordnet ist.

9. Vorrichtung nach einem der Ansprüche 3 bis 6, **dadurch gekennzeichnet, dass** der Elektromotor (22) mit einem Zahnrad (17) eines Lenkgehäuses (7) mit Zahnstange verbunden ist, das in eine Zahnstange (18) eingreift, die an der Lenkstange (3) angeordnet ist.

10. Lenkvorrichtung nach einem der Ansprüche 1 und 2, **dadurch gekennzeichnet, dass** der Drehmomentsensor (21) zur Ausrichtung der Vorderräder (9) am oberen Abschnitt der Lenksäule (4) angebracht ist.

11. Lenkvorrichtung nach einem der Ansprüche 1 und 2, **dadurch gekennzeichnet, dass** der Drehmomentsensor (31) zur Ausrichtung der Vorderräder (9) am Zahnrad (17) des Lenkgehäuses (7) mit Zahnstange angebracht ist.

12. Lenkvorrichtung nach einem der Ansprüche 1 und 2, **dadurch gekennzeichnet, dass** am oberen Abschnitt der Lenksäule ein Stellglied (29) angebracht ist, wobei das genannte Stellglied der Kraftumkehr zwischen den Vorderrädern (9) und dem Lenkrad (2) dient und mit der zentralen Steuereinheit (23) verbunden ist.

13. Lenkvorrichtung nach Anspruch 12, **dadurch gekennzeichnet, dass** das Stellglied zur Kraftumkehr (29) ein Elektromotor ist.

14. Lenkvorrichtung nach Anspruch 1, **dadurch gekennzeichnet, dass** die untere Verbindungseinheit (45) aus einem beweglichen Lager (73) besteht, das an der Lenkstange (3) befestigt ist und durch eine Öffnung (74) des Gehäuses (10) der Lenkstange (3) verläuft; sowie aus einem fest mit dem genannte Gehäuse (10) der Lenkstange (3) verbundenen Lager (71); wobei das Ende des mechanischen Kabels (41) durch das ortsfeste Lager (71) verläuft und am beweglichen Lager (73) befestigt ist.

15. Lenkvorrichtung nach einem der Ansprüche 1 und 2, **dadurch gekennzeichnet, dass** die untere Verbindungseinheit (45) aus zwei Zahnstangengetrieben (81, 82) besteht; einem ersten Getriebe (81) mit einer ersten Zahnstange (83), die fest mit dem mechanischen Kabel (41) verbunden ist und in ein erstes Zahnrad (84) eingreift, einem zweiten Getriebe (82) mit einem zweiten Zahnrad (86), das in eine zweite Zahnstange (85) eingreift, die fest mit der Lenkstange (3) verbunden ist, wobei das erste Zahnrad (84) und das zweite Zahnrad (86) drehschlüssig auf derselben Achse (87) angebracht sind, und das erste und das zweite Zahnrad derart angeordnet sind, dass die Verschiebung des mechanischen Kabels (41) eine unterschiedliche Verschiebung der Lenkstange (3) bewirkt.

16. Lenkvorrichtung nach Anspruch 9, **dadurch gekennzeichnet, dass** der Drehmomentsensor (31) auf der Zahnstange (17) des Lenkgehäuses (7) mit Zahnstange angeordnet ist, und dass ein Stellglied zur Kraftumkehr (29) zwischen den Vorderrädern (9) des Fahrzeugs und dem Lenkrad (2) am oberen Abschnitt der Lenksäule (4) angebracht ist, wobei das genannte Stellglied zur Kraftumkehr (29) elektrisch mit der zentralen Steuereinheit (23) verbunden ist.
